# EUROPEAN PATENT APPLICATION

(11) **EP 0 841 004 A1**
(43) Date of publication of application: **13.05.1998**
(21) Application number: 97500189.2
(22) Date of filing: 10.11.1997
(51) Int. Cl.: A01K 1/015, F24D 3/16

(54) **Self-supporting panel, with heating means, for the floors of farms and the like**

(30) Priority: 12.11.1996 ES 9602865 U
(71) Applicant: Rotecna, S.A., 25310 Agramunt (Lerida) (ES)
(72) Inventor: Romeu Guardia, Gener, 25310 Agramunt (Lerida) (ES)
(74) Representative: Duran Moya, Luis-Alfonso

(57) **Abstract**

The panel comprises a unitary body of injection-moulded synthetic material which has, enclosed in its mass, a tube-carrying metal sub-assembly for the hot water, which sub-assembly extends parallel to the upper face of the floor panel, thus determining an assembly of tubes (3) for the passage of heating water which are linked with one another and connected to an inlet fitting (5) and to an outlet fitting (6) for heating water. The tube-carrying sub-assembly is formed by two metal sheets (1,2) intimately joined to one another, one of which is a flat sheet (1) while the other (2) is provided with a large number of embossings (3) which form the sub-assembly of tubes for the passage of water, which tubes are linked with one another, thus forming a single circuit from an inlet fitting to an outlet fitting.

## Description

The present invention is intended to disclose a self-supporting panel provided with heating means and intended for the floors of farms and the like.

Panels for the floors of farms and the like are currently known which are provided with elements for heating by means of hot water and essentially comprise a panel of parallelepipedal shape made of an injected plastic material, are of a similar type to the floor panels normally used in this sector and have, moulded internally by blowing, a conduit for the circulating liquid in the form of a coil or the like in order to permit the passage of the heating water.

The said panels have some substantial drawbacks, including low mechanical strength of the panel as a whole and a somewhat unfavourable transmission of heat through the actual panel in view of the somewhat unsatisfactory characteristics exhibited by plastic materials as regards the transmission of heat, so that substantial irregularities occur. There is also a possibility, in the floor panels which are currently known, of contamination of the water as a result of porosity of the plastic material.

The self-supporting panel provided with heating means which forms the subject of the present invention is intended to remedy the abovementioned drawbacks, being constituted, for that purpose, by means of a single block of injected plastic material which defines, on one face, the surface for the animals to pass over, that is to say, the floor part proper of the farm, and has internally, enclosed in the actual plastic material of the panel, a metal sub-assembly carrying the ducts for the heating water which emerge on the outside, preferably on one side of the panel, and have the appropriate fittings for connecting them to the installation. The metal assembly endows the panel with strength and better heat-transmitting characteristics, and at the same time prevents any kind of contamination of the water as a result of filtration.

The internal metal sub-assembly will preferably be produced by means of two metal sheets joined to one another in a secure and water-tight manner by welding or other means, one of which sheets is flat while the other is provided with embossings which correspond to the ducts of labyrinthic type for the water, so that the joining-together of the two sheets makes it possible to obtain, in a simple and economical manner, a strong and practical metal element which will be positioned inside the mould in which the injection-moulding of the panel will be carried out, the said metal assembly therefore being completely enclosed in the plastic material of the panel.

The specific construction of the said metal sub-assembly may consist in forming a tubular passage of labyrinthic type by the joining-together of the two sheets which have been mentioned, that is to say, one smooth sheet and the other provided with embossings, there being an inlet fitting at one end of the said tubular duct and an outlet fitting at the other end of the same duct, or else it may be constructed by means of an assembly of tubes which are parallel with one another and are respectively joined to an upper header and to another, lower header, into which headers there emerge the respective water inlet and outlet apertures, for which water the corresponding fittings will be disposed.

By means of the construction indicated, the panel for the floors of farms and the like which forms the subject of the present invention makes it possible to achieve optimization in the distribution of heat as a result of the conductivity of the metal, and greater strength for the assembly, which is also much more compact and long-lasting than the similar elements which are currently known.

For the sake of better understanding, a number of explanatory drawings of a preferred embodiment of a panel for the floors of farms and the like according to the present invention, are attached as an example which is illustrative but not limitative.

Figures 1 and 2 correspond, respectively, to a section through a metal panel carrying the tubes to be incorporated in the panel forming the subject of the invention, and to a plan view of the said panel.

Figures 3 and 4 represent, respectively, a plan view from the other face of the metal panel in figure 1, and a longitudinal section through the said panel.

Figures 5 and 6 are, respectively, a longitudinal section through a constructional variant of the metal sub-assembly carrying the tubular assembly for the hot water, and a plan view of the said variant.

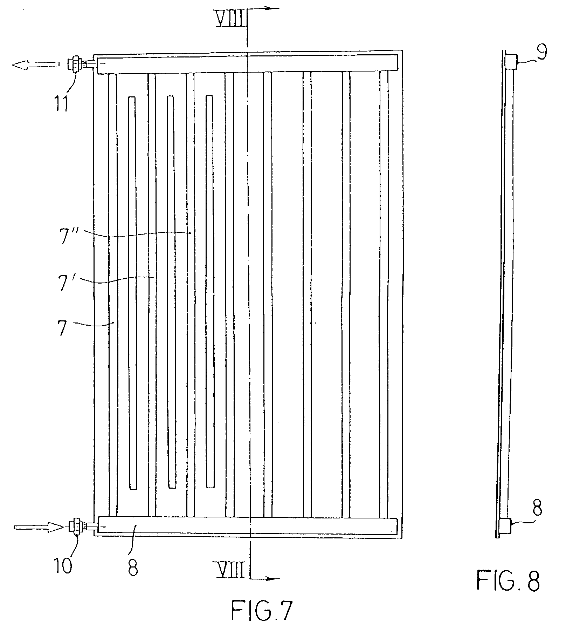

Figures 7 and 8 are, respectively, an external view of the same panel as in figures 5 and 6, and a longitudinal section through that plane of the said panel which is indicated.

Figures 9 to 14 show cross-sections of design variants of the sub-assembly carrying the tubes, according to the present invention.

Figures 15 and 16 are, respectively, a cross-section through that plane of a floor panel for farms according to the present invention which is indicated, and a plan view of the said panel.

Figure 17 shows a view of the lower face of the panel in figure 16.

Figures 18, 19 and 20 are each constructional details of the panel forming the subject of the present invention.

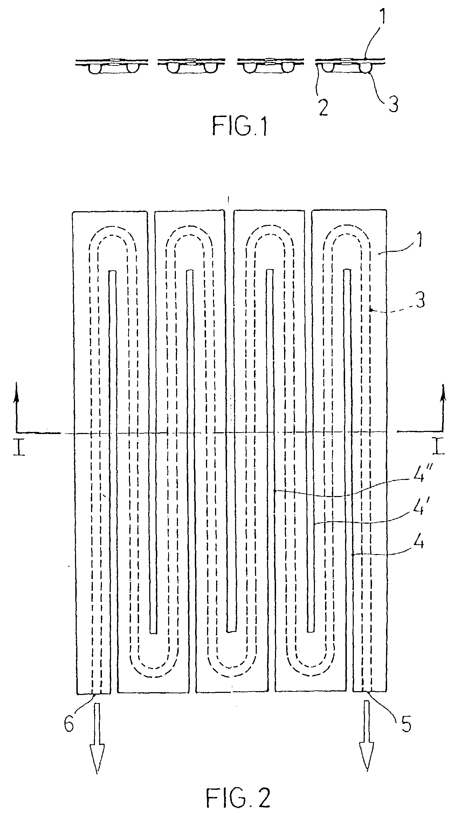

In accordance with the present invention, the sub-assembly constituting the tubes of the panel is formed by a flat sheet -1-, figure 1, and a sheet -2- carrying a large number of embossings -3- which adopt, as a whole, the specific shape desired for the tubular assembly of labyrinthic shape. The said metal sheets will be joined to one another by welding or other means, in such a way that the water-tightness and strength of the tubular assemblies -3- formed in the fashion which has been explained is guaranteed. Both the metal sheets will have apertures, such as the longitudinal grooves -4-, -4'-, -4"-,... between every two tubes, in order to permit better incorporation thereof in the moulded panel made of plastic material, thus permitting good anchorage in the said material.

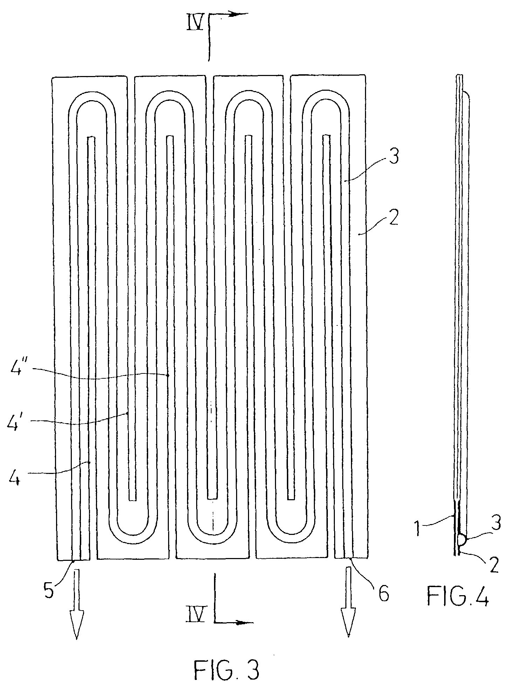

The tubular sub-assembly will have an inlet indicated by the numeral -5- in figure 3 and an outlet indicated by the numeral -6-, in which inlet and outlet there will be incorporated the appropriate fittings for connection to the water installation.

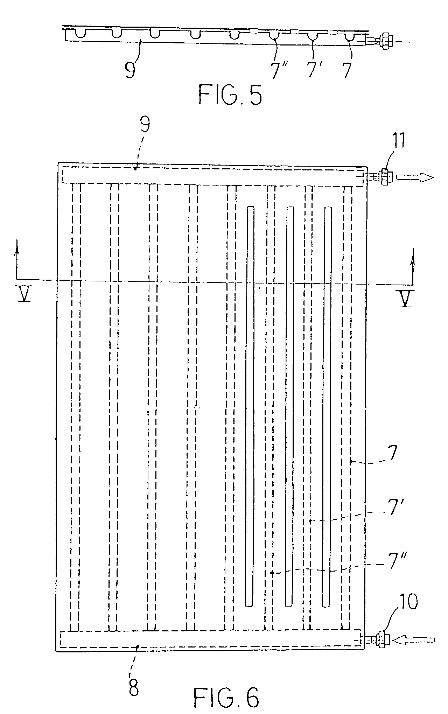

In a design variant represented in figure 6, the sub-assembly of tubes will be formed by means of a large number of tubular elements which are parallel with one another and may, for example, be rectilinear as has been represented, but which might have curved shapes or shapes of a different type, the said tubular elements having been represented by the numerals -7-, -7'-, -7"-,... and being joined to a lower header -8- and to another, upper header -9-, which headers are provided with the inlet fitting -10- and outlet fitting -11-, respectively. The construction of this tube-carrying element may be similar to that explained in the preceding figures by means of two sheets, one of them smooth and the other provided with the appropriate embossings.

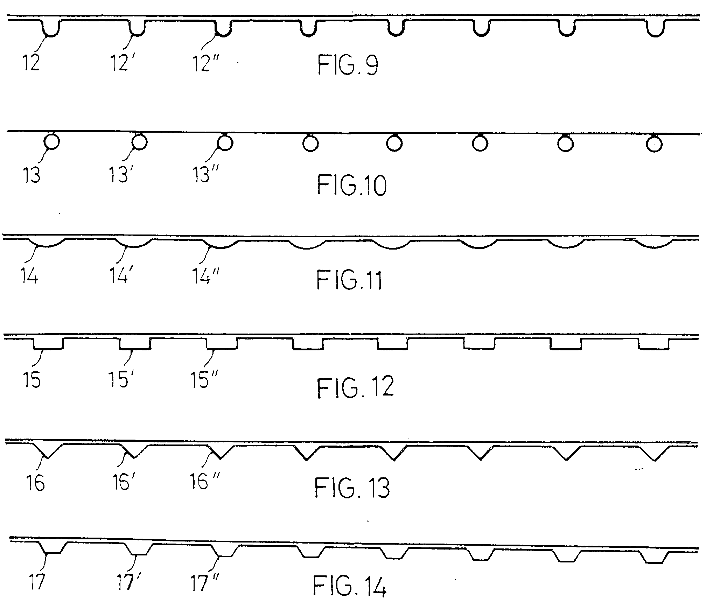

The construction of the tube-carrying sub-assemblies by means of two sheets will make it possible to obtain a large number of design variants, some of which have been represented in figures 9 to 14.

In figure 9, there can be seen a construction based on two sheets with a large number of tubular elements such as -12-, -12'-, -12"-,... the cross-section of which approximately corresponds to a U.

In figure 10, there has been represented a sub-assembly of sheets constituting the circular or almost circular tubes, such as -13-, -13'-, -13"-,...

The shape of the tubes might also follow a circular segment or similar shape, as has been represented by means of the tubes -14-, -14'-, -14"-,... in figure 11.

If desired, it would also be possible to obtain a construction for the tubes of rectangular shape in cross-section, as has been represented in figure 12, by the tubes -15-, -15'-, -15"-,...

Figures 13 and 14 each show series of tubes of triangular section -16-, -16'-, -16"-,... and of trapezoidal shape such as those indicated by the numerals -17-, -17'-, -17"-,...

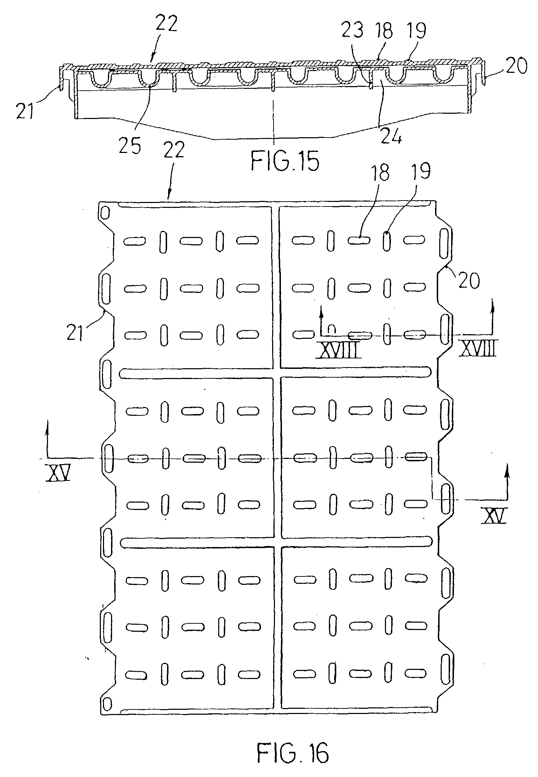

The tube-carrying sub-assembly constituted in the manner which has been indicated will be incorporated in the floor panel for farms which has been represented in figures 15 and following. The said panel will preferably adopt a rectangular general structure having, on one of its faces, a number of projections of variable shapes, such as those indicated by the numerals -18- and -19-, in order to reduce the slipperiness at the said face, and will possess edges of specific shapes such as -20- and -21- for coupling them to a supporting structure. On the inside of the said panel, which has been indicated in an overall manner by the numeral -22-, there will be incorporated a tube-carrying assembly constructed as has been indicated in the preceding part of the description.

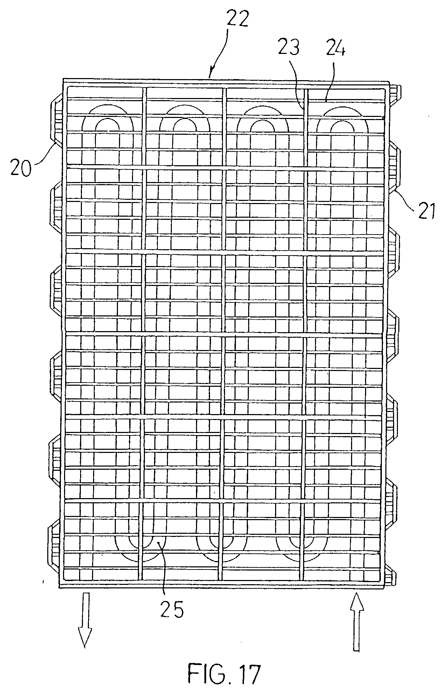

In order to improve the strength characteristics at the said rear face, it will be possible to dispose a large number of ribs or small partitions, preferably in a disposition perpendicular to one another, such as those indicated by the numerals -23- and -24- in figure 17. In the said figure, there can be seen the tubular shape -25- formed by the plastic material of the panel which surrounds the metal tube-carrying assembly enclosed in the mass of the panel -22-.

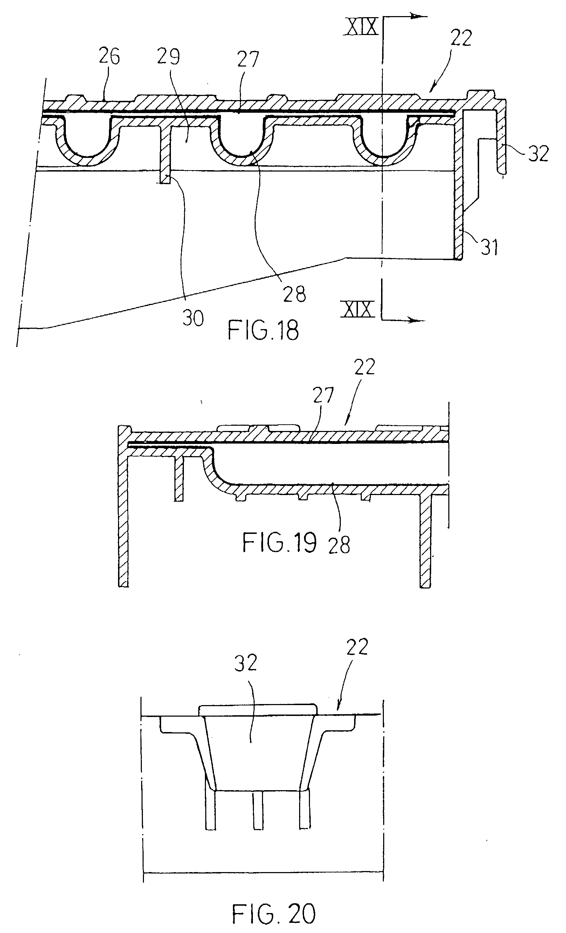

As can be seen in detail in figures 18 and 19, the floor panel -22- is constituted by a single mass of injected plastic material having, at the top, the surface -26- with anti-slip projections and having, duly incorporated in its mass, the tube-carrying sub-assembly formed by a flat sheet -27- and a sheet provided with the tubular assemblies -28- as has been explained in the preceding part of the description. There will likewise be formed in the assembly a number of transverse and longitudinal ribs such as those indicated by the numerals -29- and -30-, and the lateral flanges of variable structure such as -31- and -32-, which are intended for the incorporation of the panel in a supporting structure.

## Claims

1. Self-supporting panel, with heating means, for the floors of farms and the like, characterized in that it comprises a unitary body of injection-moulded synthetic material which has, enclosed in its mass, a tube-carrying metal sub-assembly for the hot water, which sub-assembly extends parallel to the upper face of the floor panel, thus determining an assembly of tubes for the passage of heating water which are linked with one another and connected to an inlet fitting and to an outlet fitting for heating water.

2. Self-supporting panel, with heating means, for the floors of farms and the like, according to claim 1, characterized in that the tube-carrying metal sub-assembly is formed by two metal sheets intimately joined to one another, one of which is a flat sheet while the other is provided with a large number of embossings which form the sub-assembly of tubes for the passage of water, which tubes are linked with one another, thus forming a single circuit from an inlet fitting to an outlet fitting.

3. Self-supporting panel, with heating means, for the floors of farms and the like, according to claim 1, characterized in that the tube-carrying sub-assembly is formed by two metal sheets which are intimately joined together and constitute a series of tubular lengths which are parallel with one another and are linked between an upper header and another, lower header, each of which headers is provided with a fitting for connecting the panel to the installation for circulating hot water.

4. Self-supporting panel, with heating means, for the floors of farms and the like, according to the preceding claims, characterized in that the tube-carrying metal sub-assemblies are provided with through-apertures for permitting anchorage to the injected plastic material.

5. Self-supporting panel, with heating means, for the floors of farms and the like, according to claim 1, characterized in that the panel of injected plastic material is provided, on its lower face, with a large number of flat ribs which are in a disposition perpendicular to the panel and are joined transversely to one another, thus constituting a reinforcement for the panel.
